# EUROPEAN PATENT SPECIFICATION

(11) **EP 3 176 464 B1**
(45) Date of publication and mention of the grant of the patent: **10.10.2018**
(21) Application number: 16002363.6
(22) Date of filing: 08.11.2016
(51) Int. Cl.: F16F 9/06, F16F 9/36, F16F 9/516, F16F 9/19, F16F 9/58, F16F 9/49, F16F 9/34, F16F 13/00, B60G 13/08, B60G 15/06, F16F 9/346, F16F 9/32

(54) **HYDRAULIC SUSPENSION DAMPER WITH A HYDRO-MECHANICAL STROKE STOP**
HYDRAULISCHER AUFHÄNGUNGSDÄMPFER MIT HYDROMECHANISCHEM HUBANSCHLAG
AMORTISSEUR DE SUSPENSION HYDRAULIQUE AVEC UNE BUTÉE DE COURSE HYDROMÉCANIQUE

(30) Priority: 02.12.2015 CN 201510870708
(43) Date of publication of application: 07.06.2017
(73) Proprietor: BeijingWest Industries Co. Ltd., Beijing (CN)
(72) Inventor: Chyla, Lukasz, 30-399 Kraków (PL); Widla, Waldemar, 30-399 Kraków (PL); Gasior, Grzegorz, 30-399 Kraków (PL); Wrzesinski, Jakub, 30-399 Kraków (PL)
(74) Representative: Lukaszyk, Szymon

(56) References cited:
- DE-A1- 3 010 690
- DE-B3-102011 089 140
- US-A1- 2012 090 931
- US-A1- 2015 090 548
- US-A1- 2015 247 549

## Description

The invention relates to a hydraulic damper, in particular a motor vehicle hydraulic suspension damper, comprising a tube filled with working liquid, a main piston assembly disposed slidably inside the tube, attached to a piston rod led outside the damper through a sealed piston rod guide and dividing the tube into a rebound chamber and a compression chamber, rebound and compression valve assemblies to control the flow of working liquid within the tube during rebound and compression stroke of the damper, wherein at least one end of the tube is provided with an additional stroke stop arrangement comprising a narrowed section of a diameter smaller than the diameter of the tube, having an inlet opening to the tube and provided at least partially with at least one axial groove having the cross-sectional area decreasing from said inlet along said narrowed section, a spring disposed at least partially in said narrowed section of the tube and secured to said at least one end of the tube, and an additional piston assembly having a diameter smaller than the diameter of the tube, displaceable along with the main piston assembly apt to be slidably disposed in said narrowed section of the tube and apt to engage said spring to generate additional damping force.

### Background of the Invention

A hydraulic damper provided with a hydraulic rebound stop arrangement comprising the narrowed section with the inlet provided with axial grooves having the cross-sectional area decreasing from said inlet along said narrowed section and enabling for a flow of working liquid through said grooves, while said additional piston assembly , is adjacent to said axial slots, is known for example from the patent publications EP2302252 or US3447644. US 2015/090548 A1 discloses a hydraulic damper.

Patent publication GB2014694 discloses a damping apparatus with fluid/mechanical extension stop that comprises a piston axially movable in a cylinder and dividing the cylinder interior into two fluid filled working chambers. The fluid/mechanical extension stop is disposed in the annular working chamber between the cylinder and the piston rod and may have a damping sleeve or ring acted on by a spring, and the piston rod is provided with an abutment ring. An actuating sleeve or ring is provided and cooperates mechanically or fluidically with the damping sleeve or ring, the actuating sleeve ring forming an abutment for a spring which at its other end bears against the abutment ring of the piston rod.

### Summary of the Invention

It has been the object of the present invention to provide a hydraulic damper with a stroke stop arrangement of a simple construction providing a smooth increase of damping force at the end of the stroke, which would be cost efficient, simple to manufacture, and would provide an excellent damper tuning capabilities.

Therefore, a damper of the kind mentioned in the outset, according to the present invention is characterised in that said additional piston assembly is further provided with a shaped sleeve distal with respect to the main piston assembly, a sealing ring apt to make a sliding fit with the internal wall of said narrowed section of the tube, and a supporting sleeve proximal with respect to the main piston assembly, wherein the sealing ring surrounds an inner axial rim of the shaped sleeve and is axially displaceable between the supporting sleeve and an outer axial rim of the shaped sleeve and wherein the inner axial rim defines at least one axial channel in fluid connection with at least one radial channel defined in the outer axial rim.

The shaped sleeve and the sealing ring form a return valve that opens when the additional piston assembly is in the narrowed section of the tube and the direction of the stroke changes from rebound to compression, enabling for unrestricted flow of the working liquid back to the narrowed section.

Preferably said narrowed section of the tube has a form of an insert, preferably made of plastic.

This enables for achieving simplicity of damper construction and the insert as such is an additional! tuning add-on to provide additional tuning options for the damper.

Preferably said inlet of said narrowed section of the tube has a form of a conical section.

In the invention, the inlet of said narrowed section of the tube is provided with at least one radial groove that preferably extends into said narrowed section and joins with said at least one axial groove.

Such a shaping provides a smooth increase of damping force in the region of the inlet.

Preferably said additional piston assembly is further provided with a bumper apt to engage said spring.

As only the bumper impacts and engages the spring, the shaped sleeve may be formed from plastic or any other material in which the radial and axial channels may be conveniently formed.

Preferably said stroke stop arrangement is a rebound stroke stop arrangement.

### Brief description of drawings

The invention shall be described and explained below in preferred embodiment and in connection with the attached drawings on which:
Fig. 1 is a schematic cross-sectional view of an embodiment of a damper according to the present invention at the end of the rebound stroke;
Fig. 2 is a schematic perspective view showing particular components of the stroke stop arrangement shown in Fig. 1;
Fig. 3 shows details of the insert of the stroke stop arrangement shown in Fig. 1 in a front view (Fig. 3a), a cross-sectional view (Fig. 3b) along the plane A-A shown in the front view, as well as enlarged cross-sections along the planes C-C (Fig. 3c) and D-D (Fig. 3d) shown in a cross-sectional view along the plane A-A;
Fig. 4 shows details of the shaped sleeve of the stroke stop arrangement shown in Fig. 1 in a bottom view (Fig. 4a), a side view (Fig. 4b) along the plane B-B of the bottom view and a perspective view (Fig. 4c);
Fig. 5 illustrates the operation of the rebound stroke stop arrangement shown in Fig. 1 in advancing positions (a-b) of the rebound stoke;
Fig. 6 shows the stroke stop arrangement shown in Fig. 1 at the end of the rebound stroke; and
Fig. 7 illustrates the operation of the rebound stroke stop arrangement shown in Fig. 1 in advancing positions (a-b) of the compression stoke starting from the position shown in Fig. 6.

### Detailed description of preferred embodiments

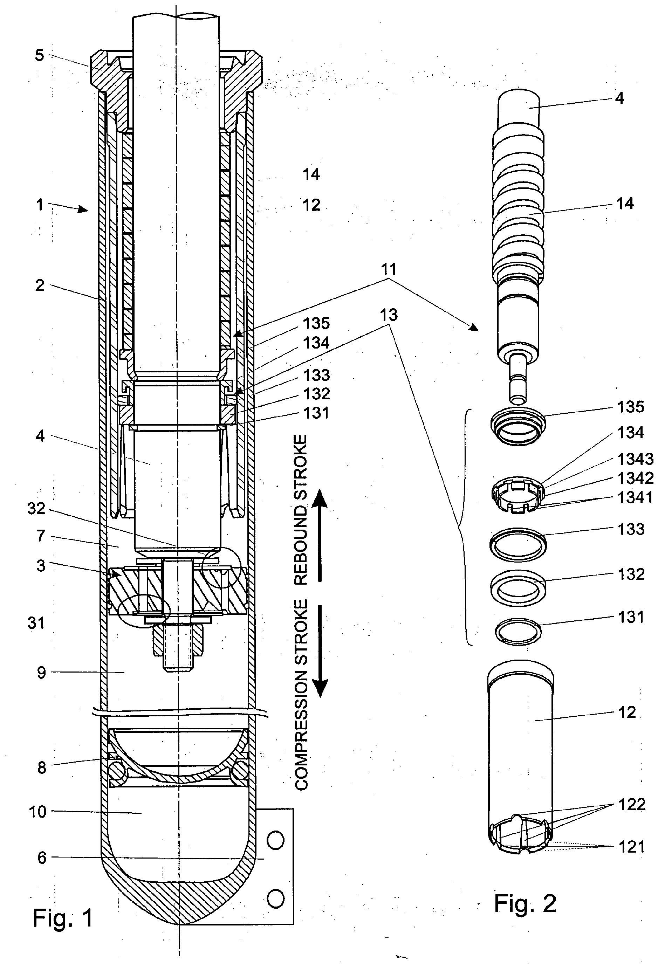

A hydraulic damper 1 shown in part in Fig. 1 is an example of a mono-tube hydraulic damper that may be employed in a vehicle suspension. It is shown almost fully extended in its position close to the end of the rebound stroke and comprises a main cylinder tube 2 inside of which a main piston assembly 3 is slidably disposed. The piston assembly 3 is attached to a piston rod 4 led outside the main tube 2 through a sealed piston rod guide 5 located at the end of the tube 2. The other end (not shown) of the piston rod 4 may be connected to the top mount of the vehicle suspension. The opposite end of the tube 2 is provided with an attachment means 6 apt to fix the damper 1 to the steering knuckle or a swing arm supporting the vehicle wheel.

A rebound chamber 7 filled with working liquid is defined between the piston rod guide 5 and the piston assembly 3. A slidable partition 8 is disposed at the other end of the damper 1. A compression chamber 9 filled with working liquid is defined between the piston assembly 3 and the slidable partition 8. Pressurised gas fills the space at the other side of the slidable partition 8 defining a gas chamber 10.

Obviously, as it is known to those skilled in the art, in a case of a twin-tube damper an additional base valve assembly is located at the bottom end of the tube 2 instead of a partition 8 and an additional compression chamber is defined after said base valve assembly in a space between the tube 2 and an external tube that surrounds the tube 2.

The piston assembly 3 is provided with rebound 31 and compression 32 valves to control the flow of working liquid passing between the compression chamber 9 and the rebound chamber 7, respectively, during rebound and compression stroke of the damper. Each valve 31 and 32 comprises a number of flow channels disposed equiangularly over the perimeter of the piston assembly 3 and a number of resilient deflectable or movable discs covering that channels and deflecting or moving under the pressure of working liquid. Number, shape, diameter and thickness of the discs, as well as number and cross-sectional area of the channels constitute, among others, the parameters that may be utilized to influence the damper working characteristics.

The damper 1 is further provided with a stroke stop arrangement 11 comprising a narrowed section of the tube 2 located in the rebound chamber, an additional piston assembly 13 attached to a piston rod 4 between the piston rod guide 5 and the piston assembly 3 apt to be slidably disposed in said narrowed section 124, and a spring 14 disposed between the piston rod guide 5 and said additional piston assembly 13.

Though in this embodiment the stroke stop arrangement 11 functions as a rebound stroke stop arrangement, it is obvious that it might be additionally or alternatively placed at the end of the compression chamber 9 (above the slidable partition 8 in case of a mono-tube dampers or above a base valve assembly in case of a twin-tube dampers) to function as a compression stroke stop arrangement.

Referring now to Fig. 2 it is shown that the additional piston assembly 13 is comprised of a bumper 135 clenched on a piston rod 4 and configured to engage with the spring 14, a plastic shaped sleeve 134, a sealing ring 133 made of metal surrounding the sleeve 134 with some radial clearance, a supporting sleeve 132 and a retaining ring 131 clenched on a piston rod 4. The bumper 135 and the retaining ring 131 are respectively distal and proximal with respect to the main piston assembly 3.

In this embodiment the narrowed section 124 of the tube 2 has a form of an additional plastic insert 12 fixed in the tube 2 to the piston rod guide 5 (cf. fig.1). It shall be obvious to those skilled in the art that such a narrowed section may easily be formed by proper internal shaping of the tube 2 itself in the rebound chamber 7 or compression chamber 9 area.

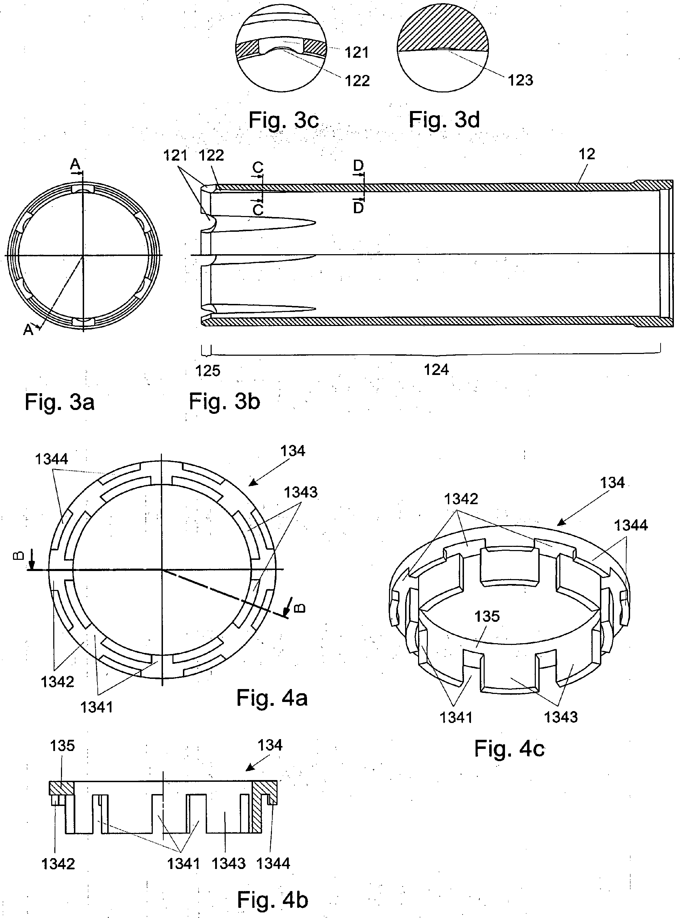

The insert 12 shown in Fig. 3 forming the narrowed section 124 of the tube 2 is made of plastic and is provided with an inlet 121 formed as a conical section extending into the tube 2. In this conical section 125 six equiangularly spaced half-circular radial grooves 121 are formed pairwise that extend into the narrowed circular section 124 and join with six circular axial grooves 122 having the axes of symmetries slightly slanted with respect to the axis of the insert 12 so that the grooves 122 vanish at some point at the inner surface of the insert 12 along the longitudinal axis thereof. From that point the insert is nonetheless provided with three equiangularly spaced safety grooves 123 shown in Fig. 3d having a relatively small clearance and extending to the other end of the insert 12.

As shown in Fig. 4 the shaped sleeve 134 is provided with an inner axial rim 1343 and an outer axial rim 1344. The inner axial rim 1343 surrounds the piston rod 4 and is split into eight equiangularly spaced axial channels 1341 that extend to the base 1355 of the sleeve 134. The outer axial rim 1344 serves to support the sealing ring 133 and is split into eight equiangularly spaced radial channels 1342 in fluid connection with said axial channels 1341.

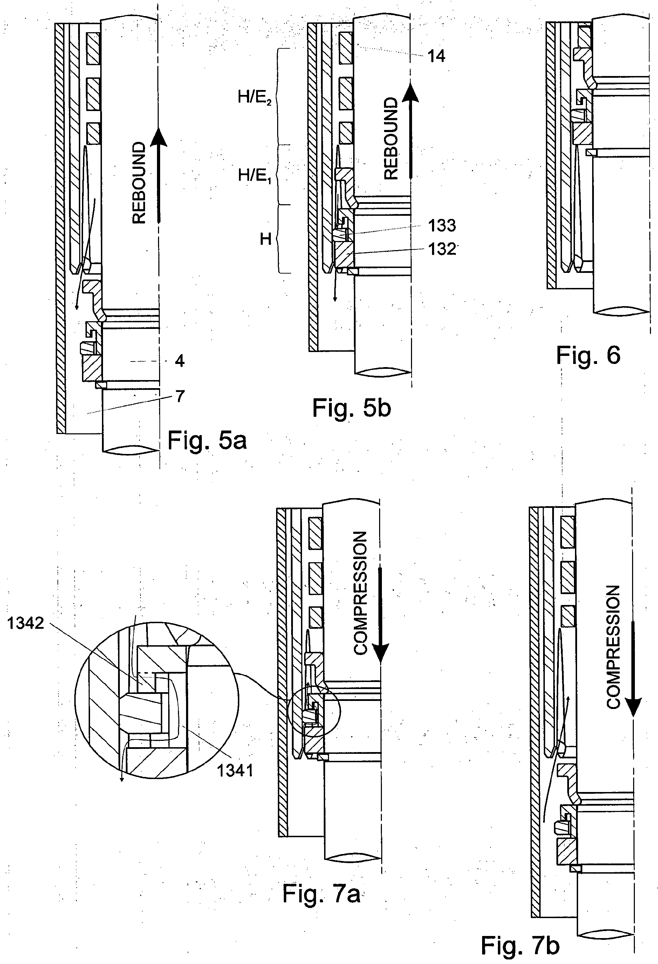

Figs. 5 to 7 illustrate the operation of the rebound stroke stop arrangement 11. As shown in Fig. 5a during the rebound stroke the additional piston assembly 13 approaches the conical section 125 separating the main part of the rebound chamber 7 and the narrowed section 124 of the tube. At this time working liquid may easily flow from within the narrowed section 124 as illustrated by an arrow.

As shown in Fig. 5b at some point the sealing ring 133 shall enter through the conical section 123 to the narrowed section 124 making a sliding fit with its internal wall. At this point fluid pressure builds up above the sealing ring 133 and the working liquid may only flow through the set of axial grooves 122 generating additional damping force proportional not only to the velocity of the piston rod 4 but also to its position since the cross-sectional area of the groves 122 diminishes as the rebound stroke progresses. This is a hydraulic damping zone depicted in Fig. 5b as "H" with respect to the upper face of the sealing ring 133. During the rebound stroke the pressure above the sealing ring 133 presses the ring 133 to the supporting sleeve 132.

At certain further point of the stroke the bumper 135 shall contact the end of the spring 14 and press against the pressure of the spring. In this zone the hydraulic damping created by restricted flow of working liquid through diminishing groves 122 shall be additionally increased by the reaction force of the spring 14. This is a first hydro/elastic damping zone depicted in Fig. 5b as "H/E₁".

Finally the flow of working liquid is no longer possible through axial grooves 122 and up to the terminal rebound stroke position shown in Fig. 6 large damping reaction is provided almost solely by the spring 14 proportionally to its shortening, as well as three safety grooves 123. This is a second hydro/elastic damping zone depicted in Fig. 5b as "H/E₂".

As shown in Fig. 7a during the backward compression stroke the pressure below the sealing ring 133 presses the ring 133 to the axial rim 1343 of the shaped sleeve 134 so that the return flow of working liquid back to the narrowed section 124 is possible through radial channels 1342 and axial channels 1341 of the shaped sleeve 134, until additional piston assembly leaves the narrowed section 124 as shown in Fig. 7b.

The shaped sleeve 134 and the sealing ring 133 therefore have a similar function as a return valve that opens if only the direction of the stroke changes from rebound to compression and enables for substantially unrestricted filing the narrowed section 124 during the compression stroke. Otherwise the damping force during backward compression stroke, where the rebound stroke stop arrangement 11 is no longer needed would be comparable to the one during the rebound stroke, where the rebound stroke stop 11 is desired.

The damper with the stroke stop arrangement according to the present invention enables for various configurations of the respective hydraulic, elastic and hydro/elastic zones ("H", "E", "H/E") in dependence to a desired damping characteristic, as well as damper application.

For example the spring 14 may be longer that the narrowed section 124. In such a case there would be two damping zones: elastic zone starting at the point of contact of the bumper 135 with the spring 14 and hydro/elastic starting at the point of entering the sealing ring 133 to the narrowed section 124.

If the spring 14 in its neutral, unbiased position corresponds to the height of the narrowed section 124, than there is only one hydro/elastic zone starting at the point of entering the sealing ring 133 to the narrowed section 124, as well as the bumper 135 engaging the spring 14.

Finally if the spring 14 is shorter than that the narrowed section 124 the damper operates as illustrated on Figs. 5 to 7, where the hydraulic damping zone "H" precedes the hydro/elastic zone "H/E".

In the described embodiment of the present invention the spring 14 is secured to the piston rod guide 5 and activated by the bumper 135 of the additional piston assembly 13. It is obvious however that it might be alternatively secured to the additional piston assembly 13. In such a case the piston rod guide 5 would act as a bumper.

The above embodiments of the present invention are merely exemplary. The figures are not necessarily to scale, and some features may be exaggerated or minimized.

### List of reference numerals:

- 1.: damper;
- 2.: main tube;
- 3.: main piston assembly;
31 rebound valves;
32 compression valves;
- 4.: piston rod;
- 5.: piston rod guide;
- 6.: attachment means;
- 7.: rebound chamber;
- 8.: slidable partition;
- 9.: compression chamber;
- 10.: gas chamber;
- 11.: stroke stop arrangement;
- 12.: insert;
121. radial grooves;
122. axial grooves;
123. safety grooves;
124. narrowed section;
125. inlet (conical section);
- 13.: additional piston assembly;
131. retaining ring;
132. supporting sleeve;
133. sealing ring;
134. shaped sleeve;
1341. axial channels;
1342. radial channels;
1343. inner axial rim;
1344. outer axial rim;
1355. base
135 bumper;
- 14.: spring

## Claims

1. A hydraulic damper (1), in particular a motor vehicle hydraulic suspension damper, comprising a tube (2) filled with working liquid, a main piston assembly (3) disposed slidably inside the tube (2), attached to a piston rod (4) led outside the damper (1) through a sealed piston rod guide (5) and dividing the tube (2) into a rebound chamber (7) and a compression chamber (9), rebound (31) and compression (32) valve assemblies to control the flow of working liquid within the tube (2) during rebound and compression stroke of the damper (1), wherein at least one end of the tube (2) is provided with an additional stroke stop arrangement (11) comprising
a narrowed section (124) of a diameter smaller than the diameter of the tube (2), having an inlet (125) opening to the tube (2) and provided at least partially with at least one axial groove (122) having the cross-sectional area decreasing from said inlet (125) along said narrowed section (124),
a spring (14) disposed at least partially in said narrowed section (124) of the tube (2) and secured to said at least one end of the tube (2), and
an additional piston assembly (13) having a diameter smaller than the diameter of the tube (2), displaceable along with the main piston assembly (3) apt to be slidably disposed in said narrowed section (124) of the tube (2) and apt to engage said spring (14) to generate additional damping force, wherein,
said additional piston assembly (13) is further provided with a shaped sleeve (134) distal with respect to the main piston assembly (3),
a sealing ring (133) apt to make a sliding fit with the internal wall of said narrowed section (124) of the tube (2), and
a supporting sleeve (132) proximal with respect to the main piston assembly (3),
wherein the sealing ring (133) surrounds an inner axial rim (1343) of the shaped sleeve (134) and is axially displaceable between the supporting sleeve (132) and an outer axial rim (1344) of the shaped sleeve (134) and wherein the inner axial rim (1343) defines at least one axial channel (1341) in fluid connection with at least one radial channel (1342) defined in the outer axial rim (1344) **characterised in that**
said inlet (125) of said narrowed section (124) of the tube (2) is provided with at least one radial groove (121) that preferably extends into said narrowed section (124) and joins with said at least one axial groove (122).

2. The hydraulic damper according to claim 1, **characterised in that**, said narrowed section (124) of the tube (2) has a form of an insert (12), preferably made of plastic.

3. The hydraulic damper according to claim 1 or 2, **characterised in that**, said inlet (125) of said narrowed section (124) of the tube (2) has a form of a conical section.

4. The hydraulic damper according to claim 1 or 2 or 3, **characterised in that**, said additional piston assembly (13) is further provided with a bumper (135) apt to engage said spring (14) and secured to the piston rod (4).

5. The hydraulic damper according to any of the preceding claims, **characterised in that**, said stroke stop arrangement (11) is a rebound stroke stop arrangement.

## Patentansprüche

1. Hydraulischer Stoßdämpfer (1), insbesondere hydraulischer Stoßdämpfer an der Federung eines Fahrzeuges, aufweisend ein mit Betriebsflüssigkeit gefülltes Rohr (2), eine innerhalb des Rohres (2) verschiebbar angeordnete Hauptkolbeneinheit (3), an der Kolbenstange (4) befestigt, die außerhalb des Stoßdämpfers (1) über eine abgedichtete Führung der Kolbenstange (5) geführt wird und das Rohr (2) in eine Rückprallkammer (7) und in eine Verdichtungskammer (9) einteilt, Rückprallventileinheiten (31) und Verdichtungsventileinheiten (32) zur Regelung des Durchflusses der Betriebsflüssigkeit im Rohr (2) beim Rückprall- und Verdichtungshub des Stoßdämpfers (1), wobei mindestens ein Ende des Rohres (2) über ein zusätzliches Hubbegrenzungssystem (11) verfügt, enthaltend einen verengten Abschnitt (124) mit einem als Durchmesser des Rohres (2) kleineren Durchmesser, aufweisend eine Eintrittsöffnung (125) für das Rohr (2) und mindestens teilweise mindestens eine axiale Nut (122), deren Querschnittsfläche vom besagten Eintritt (125) entlang des besagten verengten Abschnittes (124) kleiner wird,
eine Feder (14), die mindestens teilweise im besagten verengten Abschnitt (124) im Rohr (2) platziert und mindestens an einem besagten Ende des Rohres (2) befestigt ist,
sowie eine zusätzliche Kolbeneinheit (13) mit einem als Durchmesser des Rohres (2) kleineren Durchmesser, die sich mit der Hauptkolbeneinheit (3) bewegen kann, die in dem genannten verengten Abschnitt (124) des Rohres (2) verschiebbar platziert werden und sich mit der besagten Feder (14) zur Erzeugung einer zusätzlichen Dämpfungskraft verbinden kann,
wobei
die besagte zusätzliche Kolbeneinheit (13) zusätzlich über
eine geformte Hülse (134) verfügt, die zur Hauptkolbeneinheit (3) distal liegt,
einen Dichtungsring (133), der einen Gleitsitz für eine Innenwand des besagten verengten Abschnittes (124) des Rohres (2) gewährleistet sowie
eine Traghülse (132), die zur Hauptkolbeneinheit (3) proximal liegt,
wobei der Dichtungsring (133) einen axialen Innenreifen (1343) der geformten Hülse (134) umgibt und zwischen der Traghülse (132) und einem axialen Außenrand (1344) der geformten Hülse (134) axial verschiebbar ist, der axiale Innenreifen (1343) bestimmt hingegen mindestens einen axialen Kanal (1341) in einer Flüssigkeitsverbindung mit mindestens einem radialen Kanal (1342), der im axialen Außenrand (1344) bestimmt ist, **dadurch gekennzeichnet, dass**
der besagte Eintritt (125) des besagten verengten Abschnittes (124) des Rohres (2) über mindestens eine radiale Nut (121) verfügt, die sich vorzugsweise bis zum besagten verengten Abschnitt (124) erstreckt und sich mit mindestens einer besagten axialen Nut (122) verbindet.

2. Der hydraulische Stoßdämpfer nach Anspruch 1 **dadurch gekennzeichnet, dass** der besagte verengte Abschnitt (124) des Rohres (2) die Form eines Einsatzes (12) hat, der vorzugsweise aus Kunststoff hergestellt wird.

3. Der hydraulische Stoßdämpfer nach Anspruch 1 bzw. 2 **dadurch gekennzeichnet, dass** der besagte Eintritt (125) des besagten verengten Abschnittes (124) des Rohres (2) die Form eines kegelförmigen Abschnittes hat.

4. Der hydraulische Stoßdämpfer nach Anspruch 1, 2 bzw. 3 **dadurch gekennzeichnet, dass** die besagte zusätzliche Kolbeneinheit (13) zusätzlich über einen Puffer (135) verfügt, der sich mit der besagten Feder (14) verbinden kann und an der Kolbenstange (4) befestigt ist.

5. Der hydraulische Stoßdämpfer nach einem der vorhergehenden Ansprüche **dadurch gekennzeichnet, dass** das besagte Hubbegrenzungssystem (11) eine Rückprallbegrenzungseinheit ist.

## Revendications

1. Un amortisseur hydraulique (1), en particulier un amortisseur de suspension hydraulique du véhicule automobile comprenant un tube (2) rempli de liquide de travail, un ensemble piston principal (3) disposé de façon coulissante à l'intérieur du tube (2), fixé à une tige de piston (4) conduit à l'extérieur de l'amortisseur (1) à travers un guide de tige de piston scellé (5) et divisant le tube (2) en une chambre de détente (7) et une chambre de compression (9), les ensembles valves de détente (31) et de compression (32) pour contrôler l'écoulement du liquide de travail dans le tube (2) pendant la course de détente et de compression de l'amortisseur (1), où au moins une extrémité du tube (2) est munie d'un dispositif d'arrêt de course supplémentaire (11) comprenant
une section rétrécie (124) d'un diamètre inférieur au diamètre du tube (2), présentant une entrée (125) débouchant sur le tube (2) et pourvue au moins en partie d'au moins une rainure axiale (122) présentant la traverse sectionnelle diminuant depuis ladite entrée (125) le long de ladite section rétrécie (124),
un ressort (14) disposé au moins partiellement dans ladite section rétrécie (124) du tube (2) et fixé à ladite au moins une extrémité du tube (2), et
un ensemble piston supplémentaire (13) ayant un diamètre inférieur au diamètre du tube (2), déplaçable avec l'ensemble piston principal (3) susceptible d'être disposé de façon coulissante dans ladite section rétrécie (124) du tube (2) et apte à engager ledit ressort (14) pour générer une force d'amortissement supplémentaire, où
ledit ensemble piston additionnel (13) est en outre pourvu
d'un manchon façonné (134) distal par rapport à l'ensemble piston principal (3),
une bague d'étanchéité (133) apte à glisser avec la paroi interne de ladite section rétrécie (124) du tube (2), et
un manchon de support (132) proximal par rapport à l'ensemble piston principal (3),
dans laquelle la bague d'étanchéité (133) entoure un rebord axial interne (1343) du manchon façonné (134) et est axialement déplaçable entre le manchon de support (132) et un rebord axial externe (1344) du manchon façonné (134) et le rebord axial interne (1343) définit au moins un canal axial (1341) en liaison fluidique avec au moins un canal radial (1342) défini dans le rebord axial externe (1344) **caractérisé en ce que**
ladite entrée (125) de ladite section rétrécie (124) du tube (2) est pourvue d'au moins une rainure radiale (121) qui s'étend de préférence dans ladite section rétrécie (124) et se joint à ladite au moins une rainure axiale (122).

2. L'amortisseur hydraulique selon la revendication 1, **caractérisé en ce que** ladite section rétrécie (124) du tube (2) a la forme d'un insert (12), de préférence en matière plastique.

3. L'amortisseur hydraulique selon la revendication 1 ou 2, **caractérisé en ce que** ladite entrée (125) de ladite section rétrécie (124) du tube (2) a la forme d'une section conique.

4. L'amortisseur hydraulique selon la revendication 1 ou 2 ou 3, **caractérisé en ce que** ledit ensemble piston supplémentaire (13) est en outre muni d'un pare-chocs (135) apte à engager ledit ressort (14) et fixé à la tige de piston (4).

5. L'amortisseur hydraulique selon l'une quelconque des revendications précédentes, **caractérisé en ce que** ledit agencement de fin de course (11) est un agencement de fin de course en détente.
